# EUROPÄISCHE PATENTSCHRIFT

(11) **EP 3 310 552 B1**
(45) Veröffentlichungstag und Bekanntmachung des Hinweises auf die Patenterteilung: **21.10.2020**
(21) Anmeldenummer: 16724329.4
(22) Anmeldetag: 10.05.2016
(51) Int. Cl.: B29C 59/10, H01T 19/00, B41M 1/30, B41F 23/00

(54) **VERFAHREN ZUM ELEKTRISCHEN BEHANDELN EINER FOLIE SOWIE VORRICHTUNG HIERZU**
METHOD FOR ELECTRICALLY TREATING A FILM AND DEVICE FOR SAID METHOD
PROCÉDÉ DE TRAITEMENT ÉLECTRIQUE D'UN FILM ET DISPOSITIF CORRESPONDANT

(30) Priorität: 16.06.2015 DE 102015109635
(43) Veröffentlichungstag der Anmeldung: 25.04.2018
(73) Patentinhaber: Windmöller & Hölscher KG, 49525 Lengerich (DE)
(72) Erfinder: HOFFMANN, Frank, 48268 Greven (DE); SCHMITZ, Torsten, 48268 Greven (DE); KIRCHHOFF, Tim, 48157 Münster (DE); SEHLLEIER, Thomas, 48653 Coesfeld-Lette (DE)
(86) Internationale Anmeldenummer: PCT/EP2016/060450
(87) Internationale Veröffentlichungsnummer: WO 2016/202501

(56) Entgegenhaltungen:
- WO-A1-98/44608
- WO-A1-2007/003239
- WO-A1-2014/146669
- DE-A1- 19 923 655
- DE-A1- 19 926 374
- DE-C1- 4 212 549
- US-A- 6 099 810

## Beschreibung

Die Erfindung betrifft ein Verfahren gemäß dem Anspruch 1. Ferner bezieht sich die Erfindung auf eine Vorrichtung gemäß dem Anspruch 7.

Das Bedrucken von Folien stellt aufgrund der besonderen Materialeigenschaften hohe Anforderungen an die Drucktechnik und die Farbentwicklung. Hinzu kommen die hohen Anforderungen an das Deckungsvermögen, die Farbechtheit, die Mattigkeit und die Haftung der Farben.

US 6 099 810 A offenbart ein Verfahren gemäß dem Oberbegriff des Anspruchs 1 und eine Vorrichtung gemäß dem Oberbegriff des Anspruchs 7.

Es ist Aufgabe der vorliegenden Erfindung eine Vorrichtung und ein Verfahren zu schaffen, so dass eine verbesserte Benetzbarkeit der Folie erzielbar ist.

Die voranstehende Aufgabe wird gelöst durch ein Verfahren mit den Merkmalen des Anspruchs 1 und durch eine Vorrichtung mit den Merkmalen des Anspruchs 7. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zum elektrischen Behandeln einer Folie aus Kunststoff, mit einer Elektrodenanordnung, die mindestens eine Coronaelektrode beabstandet zur Folie aufweist, einem nahezu bis zur Folie sich erstreckenden Gehäuse, das eine Kavität aufweist, in der die mindestens eine Coronaelektrode zur Coronaentladung innerhalb der Kavität angeordnet ist, um die Oberflächenspannung der Folie zu erhöhen. Hierbei ist vorgesehen, dass durch den Einsatz einer Absaugvorrichtung die bei der Coronaentladung entstehenden Entladungsprodukte, insbesondere Ozon, aus der Kavität entfernt werden. Somit können Folien entsprechend behandelt werden, um beispielsweise diese mit wasserlöslichen Farben besser bedrucken zu können. Erfindungsgemäß kann die Oberflächenspannung der Folie beeinflusst werden, wozu die Coronabehandlung zum Einsatz kommt. Während des Produktionsprozesses wird dabei die Folie einer Coronaentladung ausgesetzt, die durch eine Hochspannungselektrode in einem Abstand von wenigen Millimetern zur Folie über die gesamte Arbeitsbreite erzeugt wird. Die Folie selbst wird während der Behandlung über ein geerdetes Coronaelement, insbesondere Walze geführt. Durch die auftretende Coronaentladung und durch das entstehende Ozon wird die Folie zielgerichtet beeinflusst. Die Wirkung der Coronaentladung auf Oberflächen beruht auf der chemischen Reaktionsfähigkeit der Coronaatmosphäre. Im Entladungsspalt zwischen der Coronaelektrode und der Trägerwalze (Coronawalze) werden Elektronen im Feld der angelegten Hochspannung beschleunigt. Bei Stößen der beschleunigten Elektronen mit den Luftmolekülen wird eine unübersehbare Vielzahl von Molekülbruchstücken und neuen Molekülen erzeugt, die zusätzlich ionisiert und elektronisch angeregt sein können. Die mit der Corona aktivierte Luft führt zu einer Oxidation der Oberfläche der Folie bis zu einer Tiefe von nur einigen wenigen Nanometern, so dass auch bei dünnen Folien ausschließlich die Oberflächeneigenschaften modifiziert werden. Als Nebenprodukt entsteht bei der Coronabehandlung u. a. korrosives Ozon und andere Gase und Dämpfe, die erfindungsgemäß über die Absaugvorrichtung abgesaugt werden. Zudem hat es sich vorteilhafterweise gezeigt, dass durch die Absaugvorrichtung innerhalb des Gehäuses eine optimierte Strömung erzielbar ist, so dass ein Anfall an Kondensat, das bei einem Auftreffen auf die Folie die Folienqualität verschlechtern würde, verhindert oder minimiert wird.

Mit zunehmender Oxidation nimmt erfindungsgemäß die Oberflächenenergie und hiermit die Benetzungsfähigkeit der Folie zu. Die Intensität der Coronabehandlung ist proportional der Corona-Dosis, die auf der Oberfläche der Folie abgesetzt wird. Die Corona-Dosis ist wiederum abhängig von der wirkenden Corona-Energie, die der Elektrodenanordnung von außen zugeführt werden muss. Es ist erfindungsgemäß darauf zu achten, dass die Oberflächenspannung nicht beliebig erhöht werden kann, da bei sehr hoher Dosis eine unzulässige Erwärmung und Schädigung der Folienoberfläche entstehen kann. Zudem ist zu berücksichtigen, dass die physikalischen und chemischen Effekte innerhalb der Coronaentladung recht kompliziert sind und im Einzelnen schwer reproduziert werden können.

Zudem bezieht sich die Erfindung darauf dass durch eine Variation des Volumenstromes der Absaugvorrichtung eine Veränderung der Oberflächenspannung der Folie entsteht. Es hat sich überraschenderweise gezeigt, dass die Auslegung und Effektivität der Absaugvorrichtung einen Einfluss auf die erzielbare Oberflächenspannung der Folie hat. Ein Grund dieser Erkenntnis ist, dass durch den Elektronenbeschuss nicht nur freie Radikale auf der Folienoberfläche entstehen, sondern es auch zur Ausgasung von Monomeren und/oder Oligomeren aus der Folie kommen kann. Werden diese nicht effektiv abgeführt, ist der zur Erhöhung der Oberflächenspannung erforderliche Reaktionsprozess gestört. Werden die ausgasenden Monomere und Oligomere nicht effektiv abgeführt, wird ein Teil dieser Ausgasungen mit der Folie mitgeschleppt und diese Bestandteile verringern die erzielte Oberflächenspannung. Des Weiteren hat sich gezeigt, dass bei nicht ausreichender Abführung der in der Coronaanlage entstehenden Stickoxyde und Ozon nicht ausreichend Reaktionspartner für die an der Folienoberfläche entstandenen freien Radikale zur Verfügung stehen und dadurch eine geringe Oberflächenspannung erreicht wird. Vorteilhafterweise hat sich nun gezeigt, dass durch den Einsatz der Absaugvorrichtung eine gezielte Reduzierung der Entladungsprodukte und/oder der durch den Elektronenbeschuss der Coronaentladung entstandenen Reaktionsprodukte aus Luft und Folie sowie der aus der Folie ausgasenden Bestandteile, wie Monomere und/oder Oligomere, erzielt werden kann. Somit können die Entladungsprodukte und/oder die Reaktionsprodukte aus dem Bereich nahe der Folienoberfläche entfernt werden.

Im Folgenden werden die Entladungsprodukte und die Reaktionsprodukte auch als "Produkte" bezeichnet. Durch eine Variation des Volumenstromes der Absaugvorrichtung ist nun eine Veränderung der Oberflächenspannung der Folie einstellbar. Die einzusetzende Corona-Energie zum Betreiben der Coronentladung kann zum Beispiel konstant gehalten werden, wobei durch eine Steigerung des Volumenstromes die Oberflächenspannung der Folie erhöht werden kann. Ein weiterer Vorteil, der sich ergeben hat, ist, dass über eine Variation des Volumenstromes die gewünschte Oberflächenspannung genauer eingestellt werden kann. Vorteilhafterweise erfolgt eine derartige Absaugung der Produkte, dass gegenüber dem heutigen Stand der Technik ein höherer Volumenstrom zur Absaugung zum Einsatz kommt, um dadurch die Produkte besser zu entfernen. Bevorzugt wird die Absaugung so gestaltet, dass bei den höheren Luftvolumenströmungen es nicht zur Kondensation kommt bzw. mögliches Kondensat gezielt an einer oder mehreren Stellen ausfällt und nicht auf die Folienoberfläche zurücktropft, welches beispielsweise über ein innerhalb des Gehäuses angeordnetes Aufnahmeelement erreicht wird, das entstehendes Kondensat zuverlässig aufnehmen kann, insbesondere verhindert, dass dieses Kondensat auf die Folie gelangt.

Ein weiterer Vorteil wird im Rahmen der Erfindung erzielt wenn während der Coronaentladung, die bei einer nahezu konstanten Corona-Energie betrieben wird durch eine Steigerung des Volumenstromes die Oberflächenspannung der Folie erhöht wird. Besonders vorteilhaft hat es sich erwiesen, dass durch eine gezielte Entfernung der während der Coronaentladung entstehenden Produkte, eine relativ hohe Oberflächenspannung der Folie erzielt werden kann, insbesondere wenn ein großer Volumenstrom aus der Kavität abgesaugt wird. Die einzusetzende Corona-Energie kann im Vergleich zum Stand der Technik sogar reduziert werden, um auf ähnliche Werte bezüglich der Oberflächenspannung der Folie zu gelangen.

Gemäß einer vorteilhaften Weiterbildung der Erfindung kann vorgesehen sein, dass während der Coronaentladung Luft in die Kavität eingebracht wird, um insbesondere die an der Oberfläche der Folie vorliegenden Entladungsprodukte zu lösen und/oder die Entfernung der Entladungsprodukte über die Absaugvorrichtung zu begünstigen. Es hat sich gezeigt, dass zusätzliche Maßnahmen zur Abführung der während der Corona-Entladung entstehenden Produkte vorteilhaft sein können, wie beispielsweise das Einbringen von zusätzlicher Luft in die Kavität. Hierdurch können die mit der Folie mitgeschleppten Produkte gezielt von der Folienoberfläche abgelöst werden, die anschließend über die Absaugvorrichtung abgeführt werden. Beispielsweise ist eine Luftzuführung für die Einbringung der Luft in die Kavität denkbar, wobei die Luftzuführung beispielsweise außerhalb des Gehäuses platziert sein kann und von dort gezielt Luft in Richtung Randbereich des Gehäuses strömen lässt, an dem die Luft über einen Spalt des Randbereichs des Gehäuses und der Folie in die Kavität eindringen kann. Hierdurch lassen sich wirkungsvoll Ablösungen der Produkte an der Oberfläche der Folie erzielen. Beispielsweise kann vorgesehen sein, dass die Luftzuführung entgegengesetzt zur Transportrichtung der Folie ausgerichtet ist, wodurch eine verbesserte Ablösung der Produkte erzielt werden kann.

Gemäß einer vorteilhaften Weiterbildung der Erfindung kann vorgesehen sein, dass ein Coronaelement die Folie entlang der Kavität trägt und/oder transportiert, wobei ein Spalt zwischen dem Gehäuse und dem Coronaelement vorliegt, durch den die Folie transportiert wird, wobei insbesondere das Coronaelement eine Walze ist, die während des Transportes der Folie rotiert. Beispielsweise ist es denkbar, dass der Spalt am Austritt der Folie aus der Kavität besonders gering gewählt ist, um ein Ablösen der Produkte weiter zu verbessern.

Gemäß einer vorteilhaften Weiterbildung der Erfindung kann vorgesehen sein, dass Luft über den Spalt oder über eine Luftzuführung, die das Gehäuse aufweist, der Kavität zugeführt wird. Erfolgt eine Luftzuführung über den Spalt, befindet sich die entsprechende Luftzuführung außerhalb des Gehäuses, insbesondere in einem definierten Abstand zu diesem. Die Luft, die in die Kavität über die außenliegende Luftzuführung geblasen wird, wirkt als eine Art Luftmesser oder Luftrakel mit einer vorzugsweise linienförmig ausgeprägten hohen Luftgeschwindigkeit, wodurch eine Ablösung der genannten Produkte von der Folienoberfläche weiter begünstigt wird. Alternativ und/oder zusätzlich kann eine Luftzuführung im Gehäuse integriert sein, die einen Volumenstrom in Richtung Oberfläche der Folie produziert, um die während der Coronaentladung entstehenden Produkte besser von der Folienoberfläche abzulösen.

Gemäß einer vorteilhaften Weiterbildung der Erfindung kann vorgesehen sein, dass die über die Luftzuführung eingeführte Luft zumindest teilweise gegen die Transportrichtung der Folie innerhalb der Kavität strömt und/oder quer zur Transportrichtung innerhalb der Kavität strömt. Vorteilhafterweise hat sich gezeigt, dass hierdurch verbesserte Ablöseeffekte an der Folienoberfläche bezüglich der während der Coronaentladung entstehenden Produkte erzielt werden können.

Gemäß einer vorteilhaften Weiterbildung der Erfindung kann vorgesehen sein, dass die über die Luftzuführung eingeführte Luft in mehrere Luftströme getrennt wird, insbesondere in zwei Luftströme getrennt wird. Hierzu ist es denkbar, dass das Gehäuse mehrere Kammern aufweist, um die oberflächennahen Produkte besser abführen zu können. Beispielsweise kann es sich ergeben, dass erhöhte Luftturbulenzen in den einzelnen Kammern entstehen, die eine verbesserte Ablösung der Produkte an der Folienoberfläche bewirken.

Ebenfalls Gegenstand der Erfindung ist eine Vorrichtung zum elektrischen Behandeln einer Folie aus Kunststoff, mit einer Elektrodenanordnung, die mindestens eine Coronaelektrode aufweist, einem Gehäuse, das eine Kavität aufweist, in der die mindestens eine Coronaelektrode zur Coronaentladung innerhalb der Kavität angeordnet ist, einem Coronaelement zum Transportieren der Folie entlang der Kavität. Hierbei ist vorgesehen, dass ein Spalt zwischen dem Gehäuse und dem Coronaelement vorliegt, wobei die Vorrichtung eine Absaugvorrichtung zur Entfernung von bei der Coronaentladung entstehenden Entladungsprodukten, insbesondere Ozon, aus der Kavität aufweist. Damit bringt die erfindungsgemäße Vorrichtung die gleichen Vorteile mit sich, wie sie ausführlich mit Bezug auf das erfindungsgemäße Verfahren beschrieben sind. Vorteilhafterweise lässt sich die erfindungsgemäße Vorrichtung auf sämtliche abhängige Ansprüche des erfindungsgemäßen Verfahrens beziehen.

Erfindungsgemäß kann vorgesehen sein, dass die Absaugvorrichtung derart ausgebildet ist, dass durch eine Variation des Volumenstromes der Absaugvorrichtung eine Veränderung der Oberflächenspannung der Folie entsteht.

Ein wesentlicher Vorteil der erfindungsgemäßen Vorrichtung ist, dass eine effektive Erhöhung der Oberflächenspannung der Folie mittels Coronaentladung durchgeführt werden kann, wobei gleichzeitig die während der Coronaentladung entstehenden Produkte, wie Entladungsprodukte, wirkungsvoll aus der Vorrichtung entfernt werden können. Über eine entsprechende Vergrößerung des Volumenstromes der Absaugvorrichtung ist erfindungsgemäß die einzusetzende Corona-Energie reduzierbar, um entsprechend hohe Oberflächenspannungen an der Folie zu erzielen.

Von weiterem Vorteil kann vorgesehen sein, dass der Spalt geringer ist als 5mm, insbesondere geringer ist als 2mm. Die Dimensionierung des Spalts begünstigt das Ablösen der von der Folie mitgeschleppten Produkte, wobei der geringe Spalt zusätzlich die Effizienz der Absaugvorrichtung begünstigt.

Von weiterem Vorteil kann vorgesehen sein, dass die Kavität eine Mehrzahl an Kammern aufweist, wobei insbesondere zwei benachbarte Kammern durch eine Wand getrennt sind, die sich zum Coronaelement erstreckt und ein Abstand zwischen dem Coronaelement und der Wand verbleibt. Vorteilhafterweise hat sich gezeigt, dass der Einsatz von mehreren Kammern die Effizienz der Absaugung innerhalb der Kavität erhöht. Die Wand, die zwei benachbarte Kammern voneinander trennt, kann sich vorteilhafterweise bis zu einem geringen Spalt zum Coronaelement erstrecken, so dass diese Wand das Ablösen von an der Folie mitgeschleppten Produkten, die während der Coronaentladung entstehen, begünstigt. Innerhalb der Kammern können Luftturbulenzen entstehen, die ebenfalls eine erhöhte Ablösung der Produkte an der Folienoberfläche erzielen.

Vorzugsweise kann vorgesehen sein, dass eine Luftzuführung vorgesehen ist, durch die Luft durch den Spalt in die Kavität einbringbar ist, wobei insbesondere die Luftzuführung derart positioniert ist, dass die Luft gegen die Transportrichtung der Folie in die Kavität einbringbar ist. Hierbei ist die Luftzuführung außerhalb des Gehäuses angeordnet, wodurch der Gesamtanordnung räumlich Flexibilität geschaffen wird, insbesondere um effektiv Luft über die Luftzuführung in die Kavität einbringen zu können.

Vorzugsweise kann vorgesehen sein, dass das Gehäuse Öffnungen zur Luftzuführung aufweist, insbesondere dass die Öffnungen an der dem Coronaelement abgewandten Seite des Gehäuses angeordnet sind. Es ist denkbar, über die zusätzlichen Öffnungen am Gehäuse, einen erhöhten Volumenstrom an Luft von außen in die Kavität einbringen zu können, wobei auch hier es zu einer Erhöhung der Luftturbulenzen und/oder einer Erhöhung der Luftgeschwindigkeiten innerhalb der Kavität und an der Folienoberfläche kommen kann.

Vorzugsweise kann vorgesehen sein, dass das Gehäuse die Absaugvorrichtung aufweist. Ebenfalls sieht die Erfindung vor, dass die Absaugvorrichtung im Gehäuse integriert sein kann, wodurch eine kompakte Gesamtanordnung der erfindungsgemäßen Vorrichtung geschaffen werden kann. Die Absaugvorrichtung kann seitlich und/oder oberhalb des Gehäuses angeordnet sein, welches unter anderem vom Bauraum der Gesamtanordnung abhängen kann.

Vorzugsweise kann vorgesehen sein, dass die Absaugvorrichtung einen Absaugkanal aufweist, der insbesondere quer zur Transportrichtung der Folie sich erstreckt. Es können auch eine Mehrzahl an Absaugkanälen am Gehäuse vorgesehen sein, um die Effizienz der Absaugung zu erhöhen.

Zudem ist im Rahmen der Erfindung denkbar, dass der Absaugkanal konisch ausgebildet ist, wobei insbesondere die Konizität quer zur Transportrichtung der Folie orientiert ist. Vorteilhafterweise kann eine Vergleichmäßigung der Luftströmung durch einen konischen Absaugkanal erzielt werden, so dass sich eine gleichmäßige Oberflächenspannung der Folie, insbesondere über der Folienbreite einstellt.

Zudem ist im Rahmen der Erfindung denkbar, dass die Kavität durch zumindest eine Wand des Gehäuses vom Absaugkanal getrennt ist, wobei die zumindest eine Wand zumindest eine Wandöffnung aufweist, durch die Luft aus der Kavität in den Absaugkanal strömen kann. Die Wandöffnung kann unterschiedliche Geometrien aufweisen. Zudem ist es denkbar, dass die Wand eine Vielzahl an Wandöffnungen aufweist, die quer zur Folienbreite verlaufen. Die Wandöffnung kann auch als Langloch ausgeführt sein, das beispielsweise parallel zur Oberfläche der Folie verläuft und während der Absaugung können die bei der Coronaentladung entstehenden Produkte aus der Kavität wirkungsvoll durch die Wandöffnungen in den Absaugkanal strömen und aus der Vorrichtung entfernt werden.

Vorteilhafterweise erfolgt während der Absaugung durch die Absaugvorrichtung stets ein Zuströmen von Frischluft von außen über den Spalt, der zwischen dem Gehäuse und der Folie besteht, wodurch eine Erhöhung der Oberflächenspannung der Folie bei der Coronaentladung ensteht.

Zudem ist im Rahmen der Erfindung denkbar, dass das Gehäuse zumindest einen Zuluftkanal der Luftzuführung aufweist, durch den Luft in die Kavität einbringbar ist. Der Zuluftkanal der Luftzuführung kann oberhalb und/oder seitlich zum Gehäuse angeordnet sein und/oder kann es vorteilhaft sein, dass die Luftzuführung mit dem Zuluftkanal im Gehäuse integriert ist. Ein Vorteil dieser Ausgestaltung der erfindungsgemäßen Vorrichtung ist, dass eine platzsparende Vorrichtung geschaffen werden kann, die gleichzeitig hohe Oberflächenspannungen an der Folie generieren kann.

Auch ist es optional denkbar, dass das Gehäuse kavitätsseitig ein Aufnahmeelement aufweist, um bei der Coronaentladung entstehendes Kondensat und/oder entstehende Entladungsprodukte, insbesondere Paraffine und/oder Ozon aufzunehmen, wobei das Aufnahmeelement rinnenartig ausgeführt ist. Falls es bei hohen Volumenströmen innerhalb der Kavität doch zu einer Kondensation kommt, wird das Kondensat wirkungsvoll durch das Aufnahmeelement aufgefangen. Vorteilhafterweise wird die Folienoberfläche durch das Kondensat nicht beschädigt. Beispielsweise kann es Sinn machen, mehrere Aufnahmeelemente innerhalb der Kavität einzusetzen, wobei insbesondere in der Nähe des Spalts und/oder in der Nähe der Folienoberfläche ein oder mehrere Aufnahmeelemente angeordnet sind. Vorteilhafterweise erstreckt sich das Aufnahmeelement quer zur Transportrichtung der Folie, also quer zur Folienbreite, so dass das Aufnahmeelement vollständig die Folie in ihrer Gesamtbreite schützt. Das Aufnahmeelement kann zum Beispiel als Rinne ausgebildet sein. Vorteilhafterweise wird über das Aufnahmeelement das aufgefangene Kondensat wirkungsvoll aus der Kavität ausgeführt. Ebenfalls ist es denkbar, dass das Aufnahmeelement neben dem Kondensat auch die entstehenden Entladungsprodukte entsprechend auffangen und/oder abführen kann.

Auch ist es optional denkbar, dass der Zuluftkanal innerhalb der Kavität verläuft, insbesondere die Kavität in zumindest zwei Kammern unterteilt. Der Zuluftkanal ist vorteilhafterweise über seine Wandung von der Kavität getrennt, wobei die Luft, die durch diesen Zuluftkanal in die Kavität eingebracht wird, gezielt auf die Folienoberfläche geführt wird. Der Zuluftkanal mündet nahe an der Folienoberfläche. Zudem ist es denkbar, dass an der Mündung des Zuluftkanals ein oder mehrere Aufnahmeelemente angeordnet sind, die mögliches Kondensat und/oder die bei der Coronaentladung entstehenden Entladungsprodukte aufnehmen kann.

Auch ist es optional denkbar, dass jeder Kammer ein Absaugkanal zugeordnet ist. Um die Effizienz bei der Absaugung und/oder bei der Oberflächenspannung der Folie zu erreichen, kann es sinnvoll sein, jede Kammer an einen eigenen Absaugkanal auszugestalten, wobei vorteilhafterweise die Kammer vom Absaugkanal durch eine Wand getrennt ist. Diese Wand weist vorteilhafterweise Öffnungen auf, durch die die genannten Produkte aus der Kavität in den Absaugkanal abgesaugt werden können. Ein weiterer Vorteil dieser Lösung ist, dass in einer ersten Kammer, die entstandenen Entladungsprodukte abgesaugt werden können, wobei in der zweiten Kammer eine vollständig gereinigte Folienoberfläche erneut für die Coronaentladung zur Verfügung steht, wodurch eine Steigerung der Oberflächenspannung über die Coronaentladung bewirkt werden kann.

Ebenfalls ist es denkbar, dass das Gehäuse mit der Coronaelektrode und der Absaugvorrichtung unterhalb des Coronaelements, insbesondere der Coronawalze platziert ist. In diesem Fall befindet sich auch der Absaugkanal unterhalb des Coronaelements, insbesondere der Kavität des Gehäuses. Die Entladungsprodukte, die während der Coronaentladung entstehen, sinken aufgrund ihrer höheren Dichte nach unten in Richtung der Absaugvorrichtung. Durch die aktive Absaugung und das naturgemäße Absinken der Entladungsprodukte wird die Luft in der Kavität, insbesondere an der Oberfläche der Folie optimal vermischt/abgesaugt.

Auch ist es optional denkbar, dass die zumindest eine Coronaelektrode hohl ausgebildet ist, die als Zuluftkanal dient, durch die Luft in die Kavität einbringbar ist, insbesondere das die Coronaelektrode eine oder mehrere Öffnungen aufweist. Vorteilhafterweise kann Luft durch die Coronaelektrode hindurchfließen und durch die Öffnungen der Coronaelektrode in die Kavität austreten. Zudem ist es denkbar, dass die Öffnungen, die sich in der Coronaelektrode befinden, so ausgerichtet sind, dass der austretende Luftstrom auf die Folienoberfläche auftrifft. Hierdurch kann die Luftschicht nahe der Folienoberfläche gut vermischt werden, die anschließend durch die erfindungsgemäße Absaugung wirkungsvoll abgesaugt werden kann.

Ein weiterer Vorteil im Rahmen der Erfindung ist erzielbar, wenn die Coronaelektrode als Gitterelement ausgebildet ist. Über das Gitterelement kann eine vergrößerte Oberflächenbehandlung der Folie erfolgen, wodurch ein sehr gleichmäßiges Entladungsmuster bei der Coronaentladung entsteht. Beispielsweise kann das Gitterelement als Drahtgitter ausgestaltet sein, welches nahe an der Folienoberfläche innerhalb der Kavität angeordnet ist.

Ebenfalls kann die Erfindung mitumfassen, dass eine Kontrolleinheit vorgesehen ist, die derart mit der Elektrodenanordnung und/oder der Absaugvorrichtung in Signalverbindung steht, so dass zuverlässig eine gewünschte Oberflächenspannung der Folie einstellbar ist. Ein wesentlicher Vorteil hierbei ist, dass über die Kontrolleinheit eine gute Einstellung der gewünschten Oberflächenspannung der Folie erzielt werden kann, wobei die Corona-Energie möglichst gering gehalten werden kann. Vorteilhafterweise ist die Kontrolleinheit in Signalverbindung mit der Elektrodenanordnung und der Absaugvorrichtung, so dass es beispielsweise denkbar ist, eine möglichst geringe Corona-Energie einzusetzen, um eine definierte Oberflächenspannung der Folie zu erzielen, wobei gleichzeitig die Kontrolleinheit die Absaugvorrichtung entsprechend steuert und/oder regelt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine mögliche Ausführungsform einer erfindungsgemäßen Vorrichtung zum elektrischen Behandeln einer Folie mit einem Gehäuse und einer Kavität, in der eine Coronaentladung durchführbar ist, um die Oberflächenspannung einer Folie, die unterhalb des Gehäuses geführt ist zu verändern, bzw. zu erhöhen,
- Fig. 2: die erfindungsgemäße Vorrichtung gemäß Figur 1, wobei innerhalb des Gehäuses mehrere Kammern vorliegen,
- Fig. 3: eine weitere Ausführungsform der erfindungsgemäßen Vorrichtung, wobei eine außenliegende Luftzuführung vorgesehen ist,
- Fig. 4: ein weiteres Ausführungsbeispiel einer erfindungsgemäßen Vorrichtung, wobei mehrere Öffnungen innerhalb des Gehäuses als Lufteinlass vorgesehen sind,
- Fig. 5: ein weiteres Ausführungsbeispiel einer erfindungsgemäßen Vorrichtung,
- Fig. 6: eine Schnittansicht gemäß der Vorrichtung nach Figur 5,
- Fig. 7: ein weiteres Ausführungsbeispiel einer erfindungsgemäßen Vorrichtung,
- Fig. 8: eine Schnittansicht gemäß der Vorrichtung nach Figur 7,
- Fig. 9: ein weiteres Ausführungsbeispiel mit einer am Gehäuse angeordneten Absaugvorrichtung sowie Luftzuführung,
- Fig. 10: eine Schnittansicht gemäß der erfindungsgemäßen Vorrichtung gemäß Figur 9,
- Fig. 11: eine weitere Variante der erfindungsgemäßen Vorrichtung mit einem Zuluftkanal, der in die Kavität des Gehäuses sich erstreckt,
- Fig. 12: eine schematische Schnittansicht gemäß der erfindungsgemäßen Vorrichtung gemäß Figur 11,
- Fig. 13: ein weiteres Ausführungsbeispiel einer erfindungsgemäßen Vorrichtung zum Behandeln einer Folie,
- Fig. 14: eine schematische Schnittansicht der erfindungsgemäßen Vorrichtung gemäß Figur 13,
- Fig. 15: ein weiteres Ausführungsbeispiel einer erfindungsgemäßen Vorrichtung zum Behandeln einer Folie, wobei hohle Coronaelektroden innerhalb der Kavität zum Einsatz kommen,
- Fig. 16: eine schematische Schnittansicht der erfindungsgemäßen Vorrichtung gemäß Figur 15 und
- Fig. 17: ein weiteres Ausführungsbeispiel einer erfindungsgemäßen Vorrichtung, wobei die Coronaelektrode als Gitter ausgebildet ist.

Ein wesentlicher Kern sämtlicher Ausführungsbeispiele der erfindungsgemäßen Vorrichtung ist, dass die Vorrichtungen 100 eine Folie 1 behandeln können, um ihre Oberflächenspannung wesentlich zu erhöhen. Hierbei weisen sämtliche Ausführungsbeispiele eine Elektrodenanordnung 10 auf, die zum einen mehrere Coronaelektroden 11 aufweisen, die in einem Gehäuse 20 sich befinden. Das Gehäuse 20 weist eine Kavität 21 auf, innerhalb dieser eine Coronaentladung durchführbar ist, wodurch die Oberflächenspannung der Folie 1, die über ein Coronaelement 15 transportiert wird, erhöht wird. Bei dem Coronaelement 15 handelt es sich um eine rotierende Walze, auf der die Folie 1 aufliegt und bei Rotation des Coronaelements 15 die Folie entlang der Kavität 21 geführt wird. Das Gehäuse 20 erstreckt sich bis nahezu zur Folie 1, so dass ein Spalt 28 zwischen dem Gehäuse 20 und dem Coronaelement 15 verbleibt. Die Coronaelektroden 11 befinden sich innerhalb der Kavität 21 und verlaufen quer zur Transportrichtung der Folie 1. Hierbei können sich die Coronaelektroden 11 über die gesamte Folienbreite erstrecken.

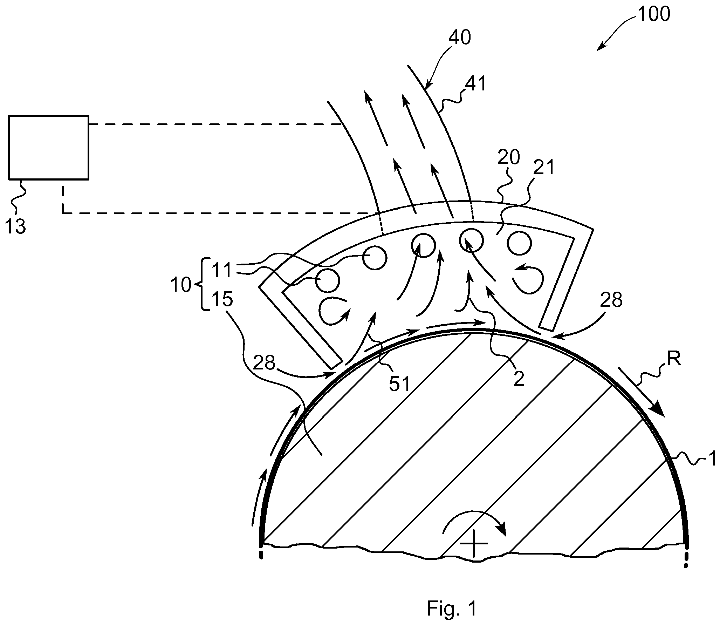

Während der Coronaentladung entstehen Produkte, insbesondere Entladungsprodukte 2 und/oder Reaktionsprodukte, die insbesondere durch eine Ausgasung aus der Folie entstehen. Bei den Entladungsprodukten 2 handelt es sich unter anderem um Ozon, welches ebenfalls aus der erfindungsgemäßen Vorrichtung abzusaugen ist, da insbesondere Ozon eine erhebliche Geruchsbelästigung darstellt. Es hat sich überraschenderweise gezeigt, dass durch einen hohen Volumenstrom der Absaugvorrichtung 40, der die soeben genannten Entladungsprodukte und/oder Reaktionsprodukte (im Folgenden Produkte genannt) absaugt, eine wesentliche Erhöhung der Oberflächenspannung der Folie 1 erzielt werden kann. Gemäß Figur 1 befindet sich die Absaugvorrichtung 40 am Gehäuse 20, wobei der Spalt 28 gering gehalten ist, insbesondere kleiner als 2mm beträgt, so dass eine effektive Absaugung innerhalb der Kavität 21 erzielbar ist.

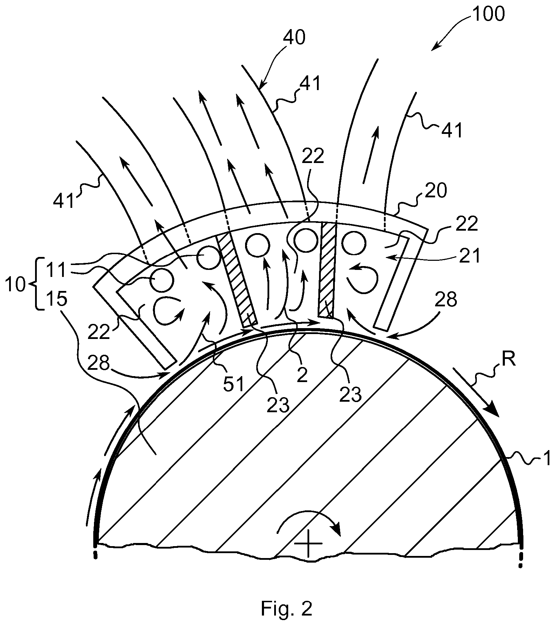

Gemäß Figur 2 ist die Besonderheit, dass mehrere Kammern 22 innerhalb der Kavität 21 vorliegen, wobei jede Kammer 22 durch eine Wand 23 getrennt ist. Während der Absaugung entstehen innerhalb der Kammern 22 erhöhte Luftturbulenzen, die ein Ablösen der Produkte, die während der Coronaentladung an der Folienoberfläche entstehen, verstärken. Hierbei kann vorgesehen sein, dass die Absaugvorrichtung 40 für jede Kammer 22 einen separaten Absaugkanal 41 aufweist, um effizient eine Absaugung der Produkte zu erreichen.

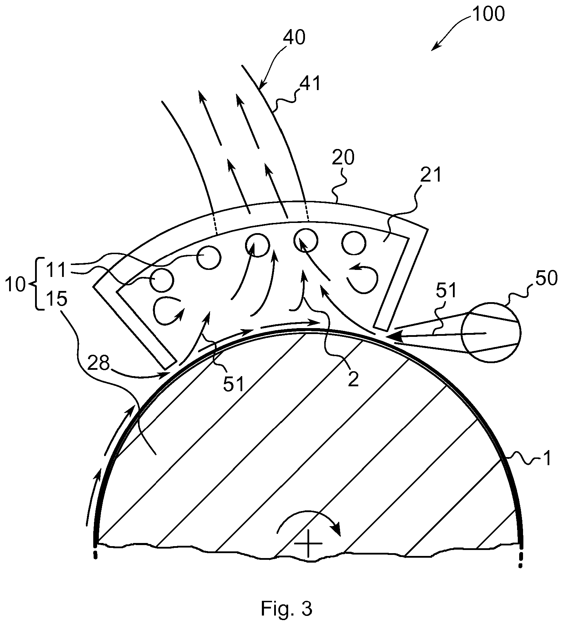

Figur 3 zeigt eine weitere Variation der erfindungsgemäßen Vorrichtung 100 gemäß Figur 1, wobei eine Luftzuführung 50 vorgesehen ist, die außerhalb des Gehäuses 20 positioniert ist, um Luft 51 durch den Spalt 28 in die Kavität 21 hineinzublasen. Hierdurch entsteht eine Art "Luftmesser" oder "Luftrakel" so dass die Ablösung der genannten Produkte von der Folienoberfläche verstärkt wird. Die Luft 51, die durch die Luftzuführung 50 in die Kavität 22 eingebracht wird, erreicht hierbei hohe Luftgeschwindigkeiten. Die Absaugvorrichtung 40 befindet sich am Gehäuse 20 und kann wirkungsvoll die Produkte aus der Kavität 21 entfernen.

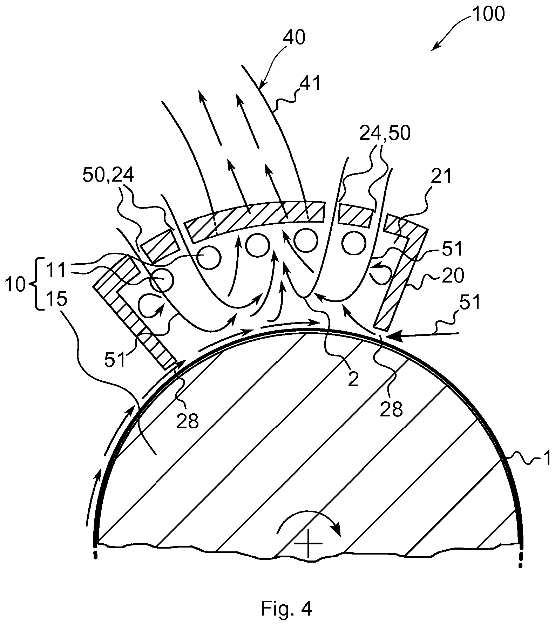

Figur 4 zeigt im Wesentlichen die erfindungsgemäße Vorrichtung 100 gemäß Figur 1, wobei das Gehäuse 20 eine Vielzahl an Öffnungen 24 zur Luftzuführung aufweist, die an der dem Coronaelement 15 abgewandten Seite des Gehäuses 20 angeordnet sind. Beim Betrieb der Absaugvorrichtung 40 entsteht ein gewisser Unterdruck innerhalb der Kavität 21, wodurch Frischluft 51 von außen durch die Öffnungen 41 eindringt. Hierdurch entstehen erhöhte Luftturbulenzen sowie erhöhte Luftgeschwindigkeiten an der Folienoberfläche, die wiederum ein vergrößertes Ablösen der bei der Coronaentladung entstehenden Produkte bewirken.

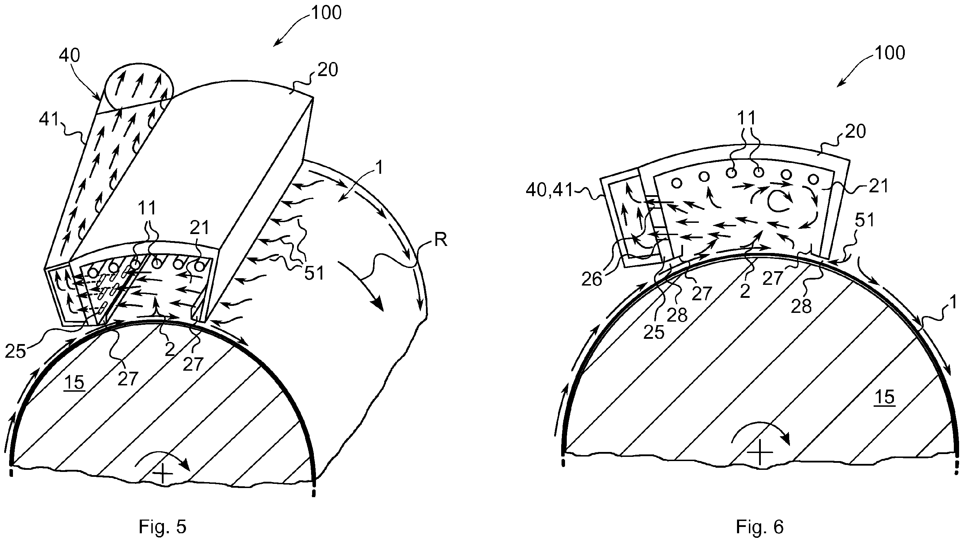

Gemäß Figur 5 ist eine Absaugvorrichtung 40 am Gehäuse 20 integriert, wobei die Absaugvorrichtung 40 einen konisch quer zur Transportrichtung der Folie verlaufenden Absaugkanal 41 aufweist. Der Absaugkanal 41 ist durch eine Wand 25 von der Kavität 21 getrennt, wobei die Wand 25 eine Vielzahl an Wandöffnungen 26 aufweist, durch die Luft 51 aus der Kavität 21 in den Absaugkanal 41 strömen kann. Während der Absaugung strömt Luft/Frischluft 51 von beiden Seiten des Gehäuses 20 durch den Spalt 28 in die Kavität 21. Innerhalb der Kavität 21 werden die Produkte von der Folienoberfläche gelöst und gelangen durch die Öffnungen 26 in den Absaugkanal 41, wobei die Strömungsrichtung im Absaugkanal 41 quer zur Transportrichtung der Folie 1 verläuft. Gemäß Figur 5 und Figur 6 kann eine Vergleichmäßigung der Luftströmung innerhalb der Kavität 21 durch den konischen Absaugkanal erzielt werden, so dass sich eine gleichmäßige Oberflächenaktivierung, insbesondere Oberflächenspannung der Folie 1 über die Folienbreite einstellt.

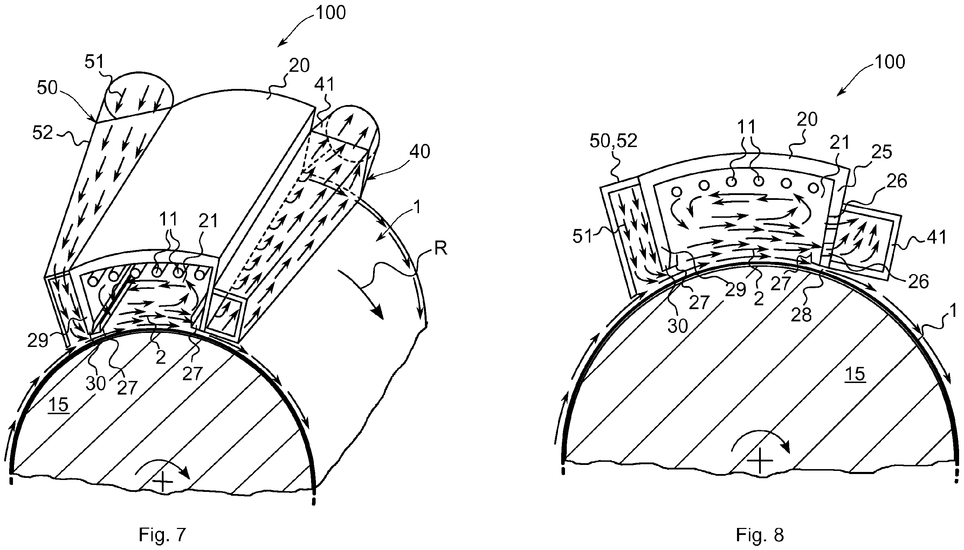

In Figur 7 und Figur 8 weist das Gehäuse 20 jeweils zu einer Seite eine Luftzuführung 50 sowie eine Absaugvorrichtung 40 auf, wobei die Absaugvorrichtung 40 einen konischen Absaugkanal 41 und die Luftzuführung 50 einen konisch verlaufenden Zuluftkanal 52 aufweist. Der Absaugkanal 41 weist Öffnungen 26 auf, durch die die Produkte, die während der Coronaentladung in der Kavität 21 entstehen, abgesaugt werden können. Zwischen dem Zuluftkanal 52 und der Kavität 21 befindet sich die Gehäusewand 29, die an ihrem freien Ende 30 verjüngt ausgebildet ist. Das freie Ende 30 befindet sich nahe der Folie 1. Beim Betrieb dieses Ausführungsbeispiels wird die Luft 51 durch den Zuluftkanal 42 mit einer hohen Geschwindigkeit entlang des freien Endes 30 in die Kavität 21 geführt. Dieses begünstigt, dass an der Oberfläche der Folie 1 ein hoher Frischluftanteil entsteht, wodurch bei der Coronaentladung eine erhöhte Oberflächenspannung der Folie 1 erzielt werden kann. Anschließend wird das Luftgemisch mit den Produkten, die bei der Coronaentladung entstehen auf der anderen Seite in den Absaugkanal 41 abgesaugt.

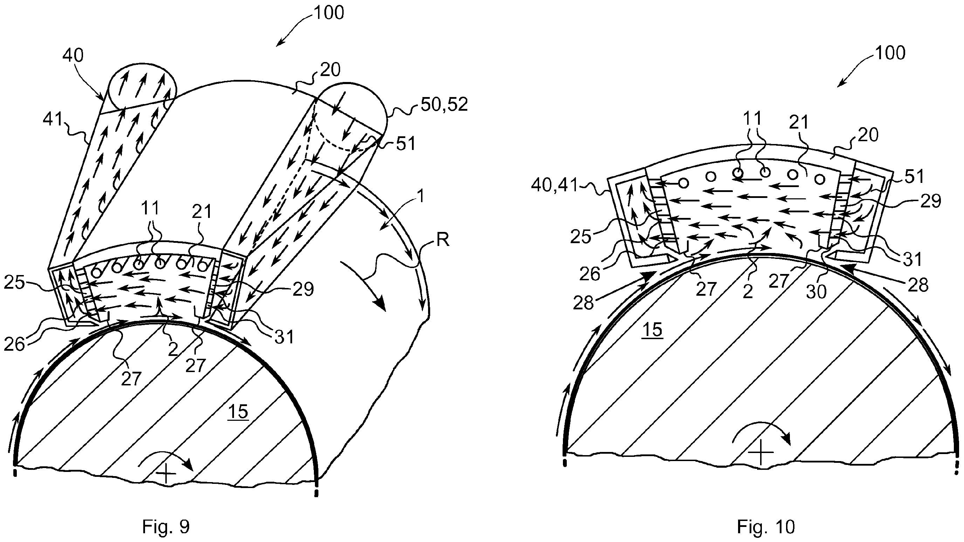

In Figur 9 und Figur 10 ist ein Ausführungsbeispiel der erfindungsgemäßen Vorrichtung gezeigt, bei dem verglichen zum Ausführungsbeispiel gemäß Figur 7 und Figur 8 der Zuluftkanal 52 mit dem Absaugkanal 41 vertauscht ist. Der Absaugkanal 41 weist Öffnungen 26 zur Kavität 21 auf. Der Zuluftkanal 52 weist ebenfalls Öffnungen 31 zur Kavität 21 auf. Sowohl Zuluftkanal 52 als auch Absaugkanal 41 sind konisch ausgebildet, wobei die Strömungsrichtung in beiden Kanälen 41, 52 quer zur Transportrichtung der Folie 1 verläuft. Innerhalb der Kavität 21 erfolgt eine sehr gute Luftdurchmischung, insbesondere an der Folienoberfläche, wodurch über die Coronaentladung eine gute bzw. hohe Oberflächenspannung der Folie 1 erzielt werden kann. Ähnlich wie in dem Ausführungsbeispiel gemäß Figur 8 und Figur 7 weist das Ausführungsbeispiel gemäß Figur 9 und Figur 10 ein freies Ende 30 auf, wobei entlang dieses Ende 30 Zuluft in die Kavität 21 ebenfalls gelangen kann. Die Drehrichtung der bahnfördernden Walze 15 ist ebenfalls im Uhrzeigersinn. Hierbei entsprechen die Vorteile denen aus Figur 7 und Figur 8.

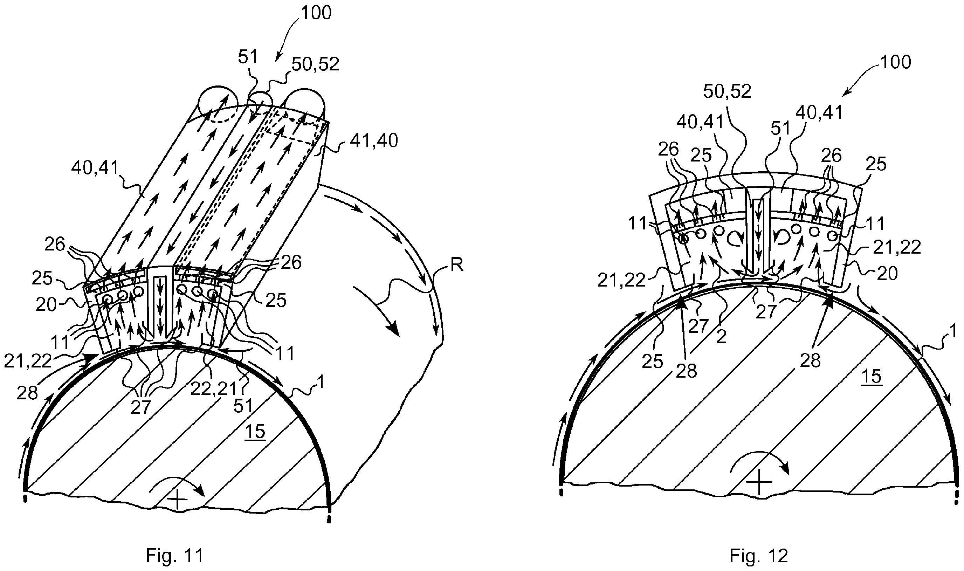

In Figur 11 und Figur 12 ist ein weiteres Ausführungsbeispiel einer erfindungsgemäßen Vorrichtung 100 gezeigt, die einen Zuluftkanal 52 aufweist, der innerhalb der Kavität 21, insbesondere mittig der Kavität 21 verläuft. Der Zuluftkanal 52 weist eine Erstreckung auf, die zur Folienoberfläche gerichtet ist. Der Zuluftkanal 52 ist durch eine Wand 29 zur Kavität 21 getrennt. Im nahen Bereich zur Folie 1 mündet der Zuluftkanal 52, so dass Luft 51 in die Kavität 21 wirkungsvoll einströmen kann. Die Kavität 21 ist aufgrund des Zuluftkanals 52 in zwei Kammern 22a, 22b aufgeteilt. Oberhalb der Kammern 22a, 22b befindet sich die Absaugvorrichtung 40 mit jeweils einem Absaugkanal 41. Jeder Absaugkanal 41 ist durch eine Wand 25 mit der Kammer 22a, 22b getrennt. Die Wand 25 weist Öffnungen 26 auf, durch die die bei der Coronaentladung entstehenden Produkte aus der Kavität 21, insbesondere aus den Kammern 22a, 22b in den jeweiligen Absaugkanal 41 abgesaugt werden können.

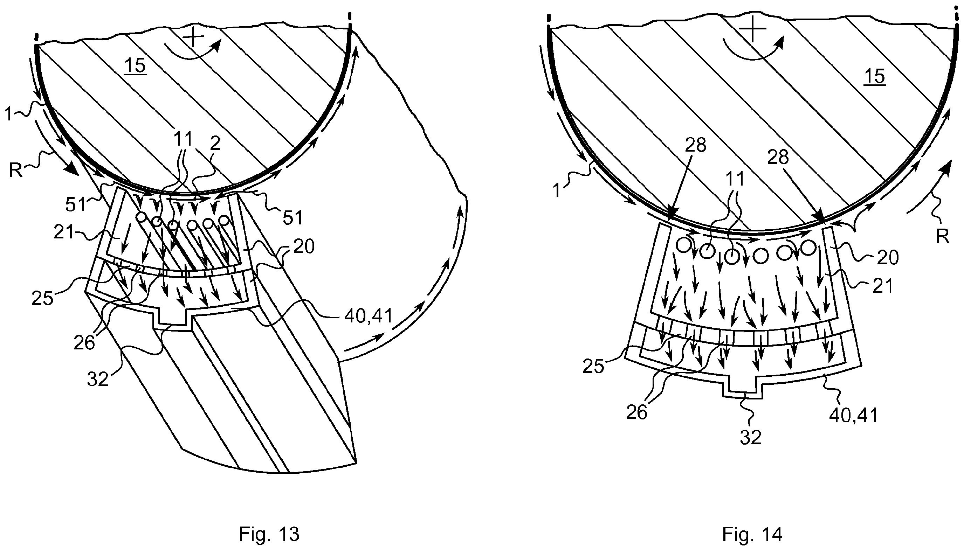

In Figur 13 und Figur 14 ist eine erfindungsgemäße Vorrichtung gezeigt, bei der die Kavität 21 sich unterhalb des Coronaelementes 15 befindet, wobei unterhalb der Kavität 21 die Absaugvorrichtung 40 mit ihrem Absaugkanal 41 sich befindet. Zwischen der Kavität 21 und dem Absaugkanal 41 ist eine Wand 25, die beide Räume trennt. Eine Luftströmung von der Kavität 21 in den Absaugkanal 41 wird durch die Öffnungen 26 ermöglicht. Die Strömungsrichtung des Absaugkanals 41 erfolgt quer zur Transportrichtung der Folie 1. Vorteil dieser Ausführungsform ist, dass die bei der Coronentladung entstehenden Produkte naturgemäß nach unten in Richtung Absaugkanal 41 automatisch sinken, so dass die Effektivität der Coronaentladung bzw. der Oberflächenspannungserhöhung erhöht wird.

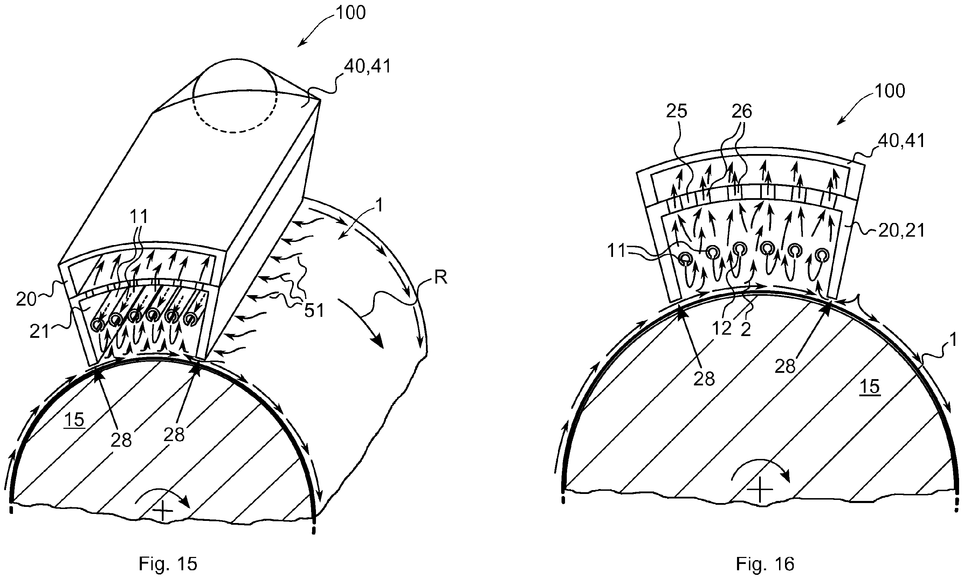

In Figur 15 und Figur 16 ist eine erfindungsgemäße Vorrichtung 100 gezeigt, die Coronaelektroden 11 aufweist, die hohl ausgebildet sind. Jede Coronaelektrode 11 dient als Zuluftkanal, durch die Luft 51 in die Kavität 21 eingebracht wird. Die Coronaelektrode 11 weist zumindest eine Öffnung 12 auf, die in Richtung Folienoberfläche gerichtet ist, wodurch eine gute Luftvermischung an der Folienoberfläche entsteht, was wiederum zu einer verbesserten Oberflächenspannung der Folie 1 führt.

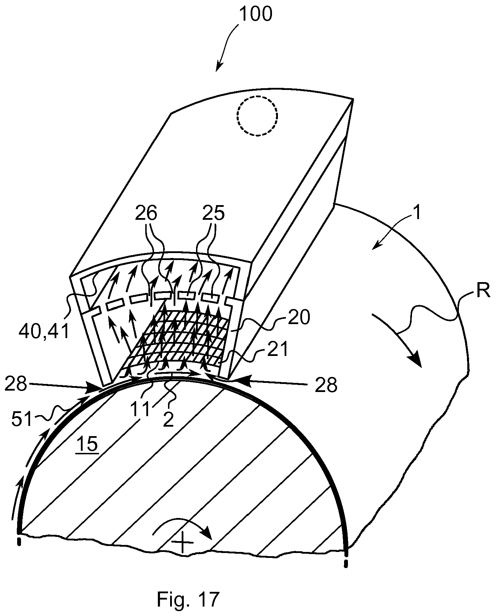

Gemäß Figur 17 ist eine erfindungsgemäße Vorrichtung 100 gezeigt, die als Coronaelektrode 11 ein Gitter einsetzt, das nahe der Folienoberfläche innerhalb der Kavität 21 positioniert ist. Oberhalb der Coronaelektrode 11 befindet sich die Absaugvorrichtung 40 mit dem Absaugkanal 41, der durch die Wand 25 von der Kavität 21 getrennt ist. Die Wand 25 weist eine Vielzahl an Öffnungen 26 auf, durch die wirkungsvoll die bei der Coronaentladung entstehenden Produkte aus der Kavität in den Absaugkanal 41 abgesaugt werden können. Die Strömungsrichtung der Luft innerhalb des Absaugkanals 41 ist wie in den Ausführungsbeispielen gemäß Figur 5 bis Figur 16 quer zur Transportrichtung der Folie 1.

Die Ausführungsbeispiele 5 bis 12 weisen innerhalb der Kavität 21 Aufnahmeelemente 27 auf, um bei der Coronaentladung entstehendes Kondensat und/oder entstehende Produkte, Entladungsprodukte aufzunehmen und wirkungsvoll aus der Kavität 21 abzuführen. Die Aufnahmeelemente 27 sind gemäß Figur 5 im Bereich des freien Endes der Wand 25 angeordnet. In Figur 7 bzw. Figur 8 ist ein Aufnahmeelement 27 am freien Ende 30 der Wand 29 angeordnet. Das zweite Aufnahmeelement 27 ist an der Wand 25 befestigt. Das gleiche gilt für das Ausführungsbeispiel gemäß Figur 9 bzw. 10. In dem Ausführungsbeispiel gemäß Figur 11 bzw. Figur 12 weist der Zuluftkanal 52 zwei Aufnahmeelemente 27 auf, die jeweils in eine Kammer 22a, 22b ragen. Auch hier sind beide Aufnahmeelemente 27 am freien Ende des Zuluftkanals 52 in der Nähe der Folienoberfläche 1 angeordnet. Des Weiteren weist die Gehäusewand am Spalt 28 jeweils ein Aufnahmeelement 27 auf, welches sich in die Kavität erstreckt, um wirkungsvoll seine Funktion zu erfüllen, insbesondere die Folie 1 zu schützen. Gemäß dem Ausführungsbeispiel nach Figur 13 bzw. Figur 14 weist der Absaugkanal 41 eine Aufnahme 32 auf, die zur Aufnahme der während der Coronaentladung entstehenden Produkte, insbesondere des Kondensats etc. dient. Die Produkte können über die Aufnahme 32 wirkungsvoll aus der Vorrichtung 100 abgeführt und/oder abgesaugt werden.

Sämtliche Ausführungsbeispiele zeigen, dass während der Rotation des Coronaelementes 15 die Folie 1 entlang der Kavität 21 geführt wird, wobei durch den Spalt 28, der zwischen dem Gehäuse 20 und der Folie 1 sich befindet, Luft 51 von allen Seiten in die Kavität 21 eingesaugt wird. Stellvertretend für sämtliche Ausführungsbeispiele zeigt Figur 1 eine Kontrolleinheit 13, die in Signalverbindung mit der Elektrodenanordnung 10 sowie der Absaugvorrichtung 40 steht. Über diese Kontrolleinheit 13 lässt sich zuverlässig die Oberflächenspannung der Folie 1 während der Coronaentladung einstellen. Sämtliche Ausführungsbeispiele weisen erfindungsgemäße Luftführungen auf, um die entstehenden Entladungsprodukte und/oder Reaktionsprodukte aus dem Bereich nahe der Folie 1 wirkungsvoll zu entfernen. Zu den Luftführungen gehören u. a. sämtliche Merkmale der Absaugvorrichtung 40, Luftzuführung 50 sowie des Gehäuses 20, einschließlich Kavität 21, Kammern 22, Aufnahmeelemente 27, Spalt 28 und Aufnahme 32.

Sämtliche Ausführungsbeispiele haben den Vorteil, dass eine erhöhte Oberflächenspannung im Vergleich zum Stand der Technik bezüglich der Folie 1 erzielt werden kann, während die einzusetzende Corona-Energie konstant gehalten wird. Ebenfalls ist es denkbar, dass die einzusetzende Corona-Energie reduziert wird und eine entsprechende Anpassung des Volumenstromes der Absaugvorrichtung 40 erfolgt, um auf eine gewünschte Oberflächenspannung der Folie 1 zu kommen, wodurch wesentliche Einsparungen bei Investitionen und beim Energieverbrauch erzielt werden. Ebenfalls hat es sich als vorteilhaft erwiesen, dass eine reproduzierbare Oberflächenspannung auf der Folie 1 erzielt wird, auch in Gebieten mit hoher Luftfeuchtigkeit.

### Bezugszeichenliste

- R: Transportrichtung

- 1: Folie
- 2: Entladungsprodukt

- 10: Elektrodenanordnung
- 11: Coronaelektrode
- 12: Öffnung
- 13: Kontrolleinheit
- 15: Coronaelement, Walze

- 20: Gehäuse
- 21: Kavität
- 22: Kammer
- 23: Wand
- 24: Öffnung
- 25: Wand
- 26: Öffnung
- 27: Aufnahmeelement
- 28: Spalt
- 29: Wand

- 30: freies Ende
- 31: Öffnung
- 32: Aufnahme, Rinne

- 40: Absaugvorrichtung
- 41: Absaugkanal
- 50: Luftzuführung
- 51: Luft
- 52: Zuluftkanal

- 100: Vorrichtung

## Patentansprüche

1. Verfahren zum elektrischen Behandeln einer Folie (1) aus Kunststoff, mit einer Elektrodenanordnung (10), die mindestens eine Coronaelektrode (11) beabstandet zur Folie (1) aufweist,
einem nahezu bis zur Folie (1) sich erstreckenden Gehäuse (20), das eine Kavität (21) aufweist, in der die mindestens eine Coronaelektrode (11) zur Coronaentladung angeordnet ist, um die Oberflächenspannung der Folie (1) zu erhöhen, wobei durch den Einsatz einer Absaugvorrichtung (40) die bei der Coronaentladung entstehenden Entladungsprodukte (2), insbesondere Ozon, aus der Kavität (21) entfernt werden, **dadurch gekennzeichnet, dass** während der Coronaentladung, die bei einer nahezu konstanten Corona-Energie betrieben wird, durch eine Steigerung eines Volumenstromes der Absaugvorrichtung (40) die Oberflächenspannung der Folie (1) erhöht wird oder wobei über eine Vergrößerung des Volumenstromes der Absaugvorrichtung (40) die einzusetzende Corona-Energie reduziert wird.

2. Verfahren nach Anspruch 1,
**dadurch gekennzeichnet,**
**dass** durch eine Variation des Volumenstroms der Absaugvorrichtung (40) eine Veränderung der Oberflächenspannung der Folie (1) entsteht.

3. Verfahren nach einem der Ansprüche 1 oder 2,
**dadurch gekennzeichnet,**
**dass** während der Coronaentladung Luft (51) in die Kavität (21) eingebracht wird, um insbesondere die an der Oberfläche der Folie (1) vorliegenden Entladungsprodukte (2) zu lösen und/oder die Entfernung der Entladungsprodukte (2) über die Absaugvorrichtung (40) zu begünstigen.

4. Verfahren nach einem der vorhergehenden Ansprüche,
**dadurch gekennzeichnet,**
**dass** ein Coronaelement (15) die Folie (1) entlang der Kavität (21) trägt und/oder transportiert, wobei ein Spalt (28) zwischen dem Gehäuse (20) und dem Coronaelement (15) vorliegt, durch den die Folie (1) transportiert wird, wobei insbesondere das Coronaelement (15) eine Walze ist, die während des Transportes der Folie (1) rotiert.

5. Verfahren nach Anspruch 4,
**dadurch gekennzeichnet,**
**dass** Luft (51) über den Spalt (28) oder über eine Luftzuführung (50), die das Gehäuse (20) aufweist, der Kavität (21) zugeführt wird, und/oder dass die über die Luftzuführung (50) eingeführte Luft (51) zumindest teilweise gegen die Transportrichtung (R) der Folie (1) innerhalb der Kavität (21) strömt und/oder quer zur Transportrichtung (R) innerhalb der Kavität (21) strömt.

6. Verfahren nach Anspruch 5,
**dadurch gekennzeichnet,**
**dass** die über die Luftzuführung (50) eingeführte Luft (51) in mehrere Luftströme getrennt wird, insbesondere in zwei Luftströme getrennt wird.

7. Vorrichtung (100) zum elektrischen Behandeln einer Folie (1) aus Kunststoff, insbesondere nach einem Verfahren nach den Ansprüchen 1 bis 6, mit einer Elektrodenanordnung (10), die mindestens eine Coronaelektrode (11) aufweist, einem Gehäuse (20), das eine Kavität (21) aufweist, in der die mindestens eine Coronaelektrode (11) zur Coronaentladung angeordnet ist,
einem Coronaelement (15) zum Transportieren der Folie (1) entlang der Kavität (21), wobei ein Spalt (28) zwischen dem Gehäuse (20) und dem Coronaelement (15) vorliegt, einer Absaugvorrichtung (40) zur Entfernung von bei der Coronaentladung entstehenden Entladungsprodukten (2), insbesondere Ozon, aus der Kavität (21), **dadurch gekennzeichnet, dass** die Absaugvorrichtung (40) derart ausgebildet ist, dass durch eine Variation eines Volumenstromes der Absaugvorrichtung (40) eine Veränderung der Oberflächenspannung der Folie (1) entsteht, wobei eine einzusetzende Corona-Energie zum Betreiben der Coronaentladung konstant haltbar ist und durch eine Steigerung des Volumenstromes die Oberflächenspannung der Folie (1) erhöhbar ist oder wobei über eine Vergrößerung des Volumenstromes der Absaugvorrichtung (40) die einzusetzende Corona-Energie reduzierbar ist.

8. Vorrichtung (100) nach Anspruch 7,
**dadurch gekennzeichnet,**
**dass** der Spalt (28) geringer ist als 5mm, insbesondere geringer ist als 2mm, und/oder dass die Kavität (21) eine Mehrzahl an Kammern (22) aufweist, wobei insbesondere zwei benachbarte Kammern (22) durch eine Wand (23) getrennt sind, die sich zum Coronaelement (15) erstreckt und ein Abstand zwischen dem Coronaelement (15) und der Wand (23) verbleibt.

9. Vorrichtung (100) nach einem der Ansprüche 7 oder 8,
**dadurch gekennzeichnet,**
**dass** eine Luftzuführung (50) vorgesehen ist, durch die Luft (51) durch den Spalt (28) in die Kavität (21) einbringbar ist, wobei insbesondere die Luftzuführung (50) derart positioniert ist, dass die Luft (51) gegen die Transportrichtung (R) der Folie (1) in die Kavität (21) einbringbar ist.

10. Vorrichtung (100) nach einem der Ansprüche 7 bis 9,
**dadurch gekennzeichnet,**
**dass** das Gehäuse (20) Öffnungen (24) zur Luftzuführung aufweist, insbesondere dass die Öffnungen (24) an der dem Coronaelement (15) abgewandten Seite des Gehäuses (20) angeordnet sind, und/oder dass das Gehäuse (20) die Absaugvorrichtung (40) aufweist.

11. Vorrichtung (100) nach einem der Ansprüche 7 bis 10,
**dadurch gekennzeichnet,**
**dass** die Absaugvorrichtung (40) einen Absaugkanal (41) aufweist, der insbesondere quer zur Transportrichtung (R) der Folie (1) sich erstreckt.

12. Vorrichtung (100) nach Anspruch 11,
**dadurch gekennzeichnet,**
**dass** der Absaugkanal (41) konisch ausgebildet ist, wobei insbesondere die Konizität quer zur Transportrichtung (R) der Folie (1) orientiert ist.

13. Vorrichtung (100) nach einem der Ansprüche 7 bis 12,
**dadurch gekennzeichnet,**
**dass** die Kavität (21) durch zumindest eine Wand (25) des Gehäuses (20) vom Absaugkanal (41) getrennt ist, wobei die zumindest eine Wand (25) zumindest eine Wandöffnung (26) aufweist, durch die Luft (51) aus der Kavität (21) in den Absaugkanal (41) strömen kann, und/oder dass das Gehäuse (20) zumindest einen Zuluftkanal (52) der Luftzuführung (50) aufweist, durch den Luft (51) in die Kavität (21) einbringbar ist.

14. Vorrichtung (100) nach einem der Ansprüche 7 bis 13,
**dadurch gekennzeichnet,**
**dass** das Gehäuse (20) kavitätsseitig ein Aufnahmeelement (27) aufweist, um bei der Coronaentladung entstehendes Kondensat und/oder entstehende Entladungsprodukte (2), insbesondere Paraffine und/oder Ozon aufzunehmen, wobei das Aufnahmeelement (27) rinnenartig ausgeführt ist.

15. Vorrichtung (100) nach Anspruch Anspruch 13,
**dadurch gekennzeichnet,**
**dass** der Zuluftkanal (52) innerhalb der Kavität (21) verläuft, insbesondere die Kavität (21) in zumindest zwei Kammern (22) unterteilt, und/oder dass jeder Kammer (22) ein Absaugkanal (41) zugeordnet ist.

16. Vorrichtung (100) nach einem der Ansprüche 7 bis 15,
**dadurch gekennzeichnet,**
**dass** die zumindest eine Coronaelektrode (11) hohl ausgebildet ist, die als Zuluftkanal dient, durch die Luft (51) in die Kavität (21) einbringbar ist, insbesondere dass die Coronaelektrode (11) eine Öffnung (12) aufweist.

17. Vorrichtung (100) nach einem der Ansprüche 7 bis 16,
**dadurch gekennzeichnet,**
**dass** die Coronaelektrode (11) als Gitterelement ausgebildet ist, und/oder dass eine Kontrolleinheit (13) vorgesehen ist, die derart mit der Elektrodenanordnung (10) und/oder der Absaugvorrichtung (40) in Signalverbindung steht, so dass zuverlässig eine gewünschte Oberflächenspannung der Folie (1) einstellbar ist.

## Claims

1. A method for electrically treating a film (1) made of plastic, having an electrode arrangement (10), which has at least one corona electrode (11) spaced apart from the film (1), a housing (20) extending nearly to the film (1), which housing has a cavity (21), in which the at least one corona electrode (11) for corona discharge is arranged, in order to increase the surface tension of the film (1), wherein the discharge products (2) produced during the corona discharge, particularly ozone, are removed from the cavity (21) by the use of a suction device (40), **characterized in that** during the corona discharge, which is operated at a nearly constant corona energy, the surface tension of the film (1) is increased by increasing a volume flow of the suction device (40) or wherein the corona energy to be used is reduced via an enlargement of the volume flow of the suction device (40).

2. The method according to claim 1,
**characterized in**
**that** a change in the surface tension of the film (1) is produced by a variation of the volume flow of the suction device (40).

3. The method according to any one of claims 1 or 2,
**characterized in**
**that** air (51) is introduced into the cavity (21) during the corona discharge, in order in particular to release the discharge products (2) present on the surface of the film (1) and/or to facilitate the removal of the discharge products (2) via the suction device (40).

4. The method according to any one of the preceding claims,
**characterized in**
**that** a corona element (15) carries and/or transports the film (1) along the cavity (21), wherein a gap (28) exists between the housing (20) and the corona element (15),
through which the film (1) is transported, wherein, in particular, the corona element (15) is a roller, which rotates during the transport of the film (1).

5. The method according to claim 4,
**characterized in**
**that** air (51) is supplied to the cavity (21) via the gap (28) or via an air supply (50), which the housing (20) has, and/or that the air (51) introduced via the air supply (50) flows at least partially against the transport direction (R) of the film (1) within the cavity (21) and/or flows transversely to the transport direction (R) within the cavity (21).

6. The method according to claim 5,
**characterized in**
**that** the air (51) introduced via the air supply (50) is separated into a plurality of air flows, in particular, is separated into two air flows.

7. A device (100) for electrically treating a film (1) made of plastic, in particular, according to a method according to claims 1 to 6, having an electrode arrangement (10), which has at least one corona electrode (11), a housing (20), which has a cavity (21), in which the at least one corona electrode (11) for the corona discharge is arranged, a corona element (15) for transporting the film (1) along the cavity (21), wherein a gap (28) exists between the housing (20) and the corona element (15), a suction device (40) for removing discharge products (2) produced during the corona discharge, particularly ozone, from the cavity (21), **characterized in that** the suction device (40) is designed in such a manner that a change in the surface tension of the film (1) is produced by a variation of a volume flow of the suction device (40), wherein a corona energy to be used for operating the corona discharge can be kept constant and the surface tension of the film (1) can be increased by an increase in the volume flow or wherein the corona energy to be used can be reduced via an enlargement of the volume flow of the suction device (40).

8. The device (100) according to claim 7,
**characterized in**
**that** the gap (28) is smaller than 5 mm, in particular, is smaller than 2 mm, and/or that the cavity (21) has a plurality of chambers (22), wherein, in particular, two adjacent chambers (22) are separated by a wall (23), which extends to the corona element (15) and a distance between the corona element (15) and the wall (23) remains.

9. The device (100) according to any one of claims 7 or 8,
**characterized in**
**that** an air supply (50) is provided, through which air (51) can be introduced through the gap (28) into the cavity (21), wherein, in particular, the air supply (50) is positioned in such a manner that the air (51) can be introduced into the cavity (21) against the transport direction (R) of the film (1).

10. The device (100) according to any one of claims 7 to 9,
**characterized in**
**that** the housing (20) has openings (24) for the air supply, in particular, that the openings (24) are arranged on the side of the housing (20) facing away from the corona element (15), and/or that the housing (20) has the suction device (40).

11. The device (100) according to any one of claims 7 to 10,
**characterized in**
**that** the suction device (40) has a suction channel (41), which extends, in particular, transversely to the transport direction (R) of the film (1).

12. The device (100) according to claim 11,
**characterized in**
**that** the suction channel (41) is conically formed, wherein, in particular, the conicity is oriented transversely to the transport direction (R) of the film (1).

13. The device (100) according to any one of claims 7 to 12,
**characterized in**
**that** the cavity (21) is separated from the suction channel (41) by at least one wall (25) of the housing (20), wherein the at least one wall (25) has at least one wall opening (26), through which air (51) can flow from the cavity (21) into the suction channel (41), and/or that the housing (20) has at least one supply air channel (52) of the air supply (50), through which air (51) can be introduced into the cavity (21).

14. The device (100) according to any one of claims 7 to 13,
**characterized in**
**that** the housing (20) has a receiving element (27) on the cavity side, in order to receive condensate produced during the corona discharge and/or discharge products (2) produced during the corona discharge, in particular, paraffins and/or ozone, wherein the receiving element (27) is designed in a channel-like manner.

15. The device (100) according to claim 13,
**characterized in**
**that** the supply air channel (52) runs within the cavity (21), in particular, the cavity (21) divided into at least two chambers (22), and/or that a suction channel (41) is assigned to each chamber (22).

16. The device (100) according to any one of claims 7 to 15,
**characterized in**
**that** the at least one corona electrode (11) is designed so as to be hollow, which serves as a supply air channel, through which air (51) can be introduced into the cavity (21), in particular, that the corona electrode (11) has an opening (12).

17. The device (100) according to any one of claims 7 to 16,
**characterized in**
**that** the corona electrode (11) is designed as a grid element, and/or that a control unit (13) is provided, which is in signal connection with the electrode arrangement (10) and/or the suction device (40), in such a manner that a desired surface tension of the film (1) can be reliably set.

## Revendications

1. Procédé de traitement électrique d'un film (1) en matière plastique, avec une disposition d'électrodes (10) qui comprend au moins une électrode à décharge en couronne (11) distante du film (1),
un boîtier (20) s'étendant presque jusqu'au film (1), qui comprend une cavité (21) dans laquelle est disposée au moins une électrode à décharge en couronne (11) pour une décharge en couronne, afin d'augmenter la tension de surface du film (1), dans lequel
grâce à l'utilisation d'un dispositif d'aspiration (40), les produits de décharge (2) apparaissant lors de la décharge en couronne, plus particulièrement l'ozone, sont éliminés hors de la cavité (21), **caractérisé en ce que**
pendant la décharge en couronne, qui est réalisée avec une énergie de couronne presque constante, la tension de surface du film (1) est augmentée par une augmentation d'un débit volumique du dispositif d'aspiration (40) ou dans lequel une augmentation du débit volumique du dispositif d'aspiration (40) permet de réduire l'énergie de décharge en couronne à utiliser.

2. Procédé selon la revendication 1,
**caractérisé en ce que**
une variation du débit volumique du dispositif d'aspiration (40) permet de provoquer une modification de la tension de surface du film (1).

3. Procédé selon la revendication 1 ou 2,
**caractérisé en ce que**
pendant la décharge en couronne, de l'air (51) est introduit dans la cavité (21) afin, plus particulièrement, de détacher les produits de décharge (2) présents sur la surface du film (1) et/ou de faciliter l'élimination des produits de décharge (2) par le dispositif d'aspiration (40).

4. Procédé selon l'une des revendications précédentes,
**caractérisé en ce que**
un élément de couronne (15) supporte et/ou transporte le film (1) le long de la cavité (21), dans lequel un interstice (28) existe entre le boîtier (20) et l'élément de couronne (15), à travers lequel le film (1) est transporté, dans lequel, plus particulièrement, l'élément de couronne (15) est un rouleau qui tourne pendant le transport du film (1).

5. Procédé selon la revendication 4,
**caractérisé en ce que**
de l'air (51) est introduit, par l'intermédiaire de l'interstice (28) ou par l'intermédiaire d'une alimentation en air (50), que comprend le boîtier (20), dans la cavité (21) et/ou **en ce que** l'air (51) introduit par l'intermédiaire de l'alimentation en air (50) s'écoule au moins partiellement contre la direction de transport (R) du film (1) à l'intérieur de la cavité (21) et/ou transversalement à la direction de transport (R) à l'intérieur de la cavité (21).

6. Procédé selon la revendication 5,
**caractérisé en ce que**
l'air (51) introduit par l'intermédiaire de l'alimentation en air (50) est divisé en plusieurs flux d'air, plus particulièrement en deux flux d'air.

7. Dispositif (100) pour le traitement d'un film (1) en matière plastique, plus particulièrement selon un procédé selon les revendications 1 à 6, avec
une disposition d'électrodes (10) qui comprend au moins une électrode à décharge en couronne (11), un boîtier (20), qui comprend une cavité (21), dans laquelle l'au moins une électrode à décharge en couronne (11) est disposée pour la décharge en couronne,
un élément de couronne (15) pour le transport du film (1) le long de la cavité (21), dans lequel un interstice (28) existe entre le boîtier (20) et l'élément de couronne (15), un dispositif d'aspiration (40) pour l'élimination des produits de décharge (2) apparaissant lors de la décharge en couronne, plus particulièrement l'ozone, hors de la cavité (21), **caractérisé en ce que** le dispositif d'aspiration (40) est conçu de façon à ce qu'une variation d'un débit volumique du dispositif d'aspiration (40) provoque une modification de la tension de surface du film (1), dans lequel une énergie de couronne à utiliser pour la décharge à couronne peut être maintenue constante et une augmentation du débit volumique permet d'augmenter la tension de surface du film (1) ou dans lequel une augmentation du débit volumique du dispositif d'aspiration (40) permet de réduire l'énergie de couronne à utiliser.

8. Dispositif (100) selon la revendication 7,
**caractérisé en ce que**
l'interstice (28) est inférieur à 5 mm, plus particulièrement inférieure à 2 mm et/ou **en ce que** la cavité (21) comprend une pluralité de chambres (22), dans lequel plus particulièrement deux chambres adjacentes (22) sont séparées par une paroi (23) qui s'étend vers l'élément de couronne (15) et une distance subsiste entre l'élément de couronne (15) et la paroi (23).

9. Dispositif (100) selon l'une des revendications 7 ou 8,
**caractérisé en ce que**
une alimentation en air (50) est prévue, grâce à laquelle de l'air (51) peut être introduit à travers l'interstice (28) dans la cavité (21), dans lequel plus particulièrement l'alimentation en air (50) est positionnée de façon à ce que l'air (51) puisse être introduit dans la cavité (21) contre la direction de transport (R) du film (1).

10. Dispositif (100) selon l'une des revendications 7 à 9,
**caractérisé en ce que**
le boîtier (20) comprend des ouvertures (24) pour l'alimentation en air, plus particulièrement **en ce que** les ouvertures (24) sont disposées sur le côté du boîtier (20) opposé à l'élément de couronne (15) et/ou **en ce que** le boîtier (20) comprend le dispositif d'aspiration (40).

11. Dispositif (100) selon l'une des revendications 7 à 10,
**caractérisé en ce que**
le dispositif d'aspiration (40) comprend un canal d'aspiration (41) qui s'étend plus particulièrement transversalement à la direction de transport (R) du film (1).

12. Dispositif (100) selon la revendication 11,
**caractérisé en ce que**
le canal d'aspiration (41) présente une forme conique, dans lequel plus particulièrement conicité est orientée transversalement à la direction de transport (R) du film (1).

13. Dispositif (100) selon l'une des revendications 7 à 12,
**caractérisé en ce que**
la cavité (21) est séparée, par au moins une paroi (25) du boîtier (20), du canal d'aspiration (41), dans lequel l'au moins une paroi (25) comprend au moins une ouverture de paroi (26) à travers laquelle l'air (51) peut s'écouler de la cavité (21) vers le canal d'aspiration (41), et/ou **en ce que** le boîtier (20) comprend au moins un canal d'arrivée d'air (52) de l'alimentation en air (50) à travers lequel l'air (51) peut être introduit dans la cavité (21).

14. Dispositif (100) selon l'une des revendications 7 à 13,
**caractérisé en ce que**
le boîtier (20) comprend, côté cavité, un élément de logement (27) afin de loger le condensat et/ou les produits de décharge (2) apparaissant lors de la décharge en couronne, plus particulièrement la paraffine et/ou l'ozone, dans lequel l'élément de logement (27) présente la forme d'une gouttière.

15. Dispositif (100) selon la revendication 13,
**caractérisé en ce que**
le canal d'arrivée d'air (52) s'étend à l'intérieur de la cavité (21), plus particulièrement la cavité (21) est divisée en au moins deux chambres (22) et/ou en ce qu'à chaque chambre (22) correspond un canal d'aspiration (41).

16. Dispositif (100) selon l'une des revendications 7 à 15,
**caractérisé en ce que**
l'au moins une électrode à décharge en couronne (11) est creuse, ce qui lui permet de servir de canal d'arrivée à travers lequel l'air (51) peut être introduit dans la cavité (21), plus particulièrement **en ce que** l'électrode à décharge en couronne (11) comprend une ouverture (12).

17. Dispositif (100) selon l'une des revendications 7 à 16,
**caractérisé en ce que**
l'électrode à décharge en couronne (11) est conçue comme un élément à grille et/ou **en ce qu'**une unité de contrôle (13) est prévue, qui est en liaison grâce à des signaux avec la disposition d'électrodes (10) et/ou le dispositif d'aspiration (40), de façon à ce qu'une tension de surface souhaitée du film (1) puisse être réglée de manière fiable.
